Europäisches Patentamt

European Patent Office

Office européen des brevets

(11) Veröffentlichungsnummer : **0 017 797**
**B1**

(12) # EUROPÄISCHE PATENTSCHRIFT

(45) Veröffentlichungstag der Patentschrift :
**01.09.82**

(21) Anmeldenummer : **80101524.9**

(22) Anmeldetag : **22.03.80**

(51) Int. Cl.³ : **B 01 J   8/10, B 01 J 19/28,**
**B 01 J 29/38, C 01 B   7/19,**
**C 01 B 31/10, C 01 B 33/28,**
**C 10 B   1/10// C01B17/76,**
**C01F7/50, C01G1/06,**
**C10G3/00**

(54) **Drehrohrreaktor zum Wärmebehandeln von Gut und Verfahren unter Verwendung dieses Drehrohrreaktors.**

(30) Priorität : **12.04.79 DE 2914964**

(43) Veröffentlichungstag der Anmeldung :
**29.10.80 (Patentblatt 80/22)**

(45) Bekanntmachung des Hinweises auf die Patenterteilung : **01.09.82 Patentblatt 82/35**

(84) Benannte Vertragsstaaten :
**BE CH DE FR GB IT NL**

(56) Entgegenhaltungen :
**DE A 1 804 395**
**DE C 693 641**
**FR A 2 072 724**
**GB A 178 537**
**US A 1 495 573**
**US A 3 319 351**
**US A 3 765 102**

(73) Patentinhaber : **BAYER AG**
**Zentralbereich Patente, Marken und Lizenzen**
**D-5090 Leverkusen 1, Bayerwerk (DE)**

(72) Erfinder : **Keller, Wolfgang, Dipl.-Ing.**
**Römerfeld 17**
**D-5060 Bergisch-Gladbach 2 (DE)**
Erfinder : **Weiss, Wolgang, Dr.**
**Gerstenkamp 9**
**D-5000 Köln 80 (DE)**

Imprimerie Jouve, 18, rue St-Denis, 75001 Paris, France

# Drehrohrreaktor zum Wärmebehandeln von Gut und Verfahren unter Verwendung dieses Drehrohrreaktors

Die Erfindung betrifft einen Drehrohrreaktor zum Wärmebehandeln von pulvrigem bis stückigem Feststoff und/oder Stoffen in Form von Flüssigkeit unter Entwicklung von Gasen und gegebenenfalls Zuführung weiterer Stoffe, bestehend aus einem Bündel achsparalleler Rohre, die in dazu senkrecht angeordneten Scheiben gelagert sind, indem die einzelnen Rohre zu mindestens einem Behandlungsstrang miteinander verbunden sind, dessen Beginn eine Gutzuführung und dessen Ende eine Gutabführung zugeordnet sind. Außerdem betrifft die Erfindung Verfahren unter Verwendung des vorgenannten Drehrohrreaktors.

Derartige Reaktoren dienen der Wärmebehandlung durch Erhitzen oder Kühlen, z.B. zum Zwecke des Aufheizens oder Kühlens von Gut, beispielsweise unter Verdampfen oder Ausdampfen, unter Kristallbildung, Schmelzen oder Verfestigen, Sublimieren.

Diese Reaktoren werden aber auch eingesetzt für die Durchführung chemischer Reaktionen zur Erzeugung chemischer Stoffe unter Beteiligung fester und/oder flüssiger und/oder gasförmiger Reaktanten.

Im Prinzip sind solche Drehrohrreaktoren in Form von Trocknern oder Wärmetauschern bekannt und werden zum Trocknen der verschiedensten körnigen oder pulvrigen Stoffe verwendet. Das zu trocknende Gut wird in der Regel mit dem Heizgas zusammen durch die Rohre transportiert. Aber auch indirekte Beheizung ist bekannt.

Diesen Apparaten mangelt es an der Möglichkeit, gezielt in den Reaktionsablauf an bestimmten Stellen eingreifen zu können.

Dementsprechend stellt sich die Aufgabe, einen Drehrohrreaktor zu finden, der an definierten Stellen einen Eingriff in die Behandlung des Gutes erlaubt. Außerdem sollen Verfahren unter Verwendung dieses Reaktors verbessert werden.

Die Aufgabe wird gemäß der Erfindung dadurch gelöst, daß der Behandlungsstrang in einzelne Abschnitte unterteilt ist, wobei jeder Abschnitt mit einer Gasabführung versehen ist und wobei die benachbarten Abschnitte durch Gutdurchlässe miteinander verbunden sind.

Dadurch wird erreicht, daß in den einzelnen Abschnitten des Behandlungsstranges definierte Gasatmosphären aufrechterhalten werden können. Durch Wahl der Länge der Abschnitte und Beeinflussung des Guttransportes in jedem Abschnitt, d.h. durch Beeinflussung der Verweilzeit, kann eine Reaktion exakt gesteuert werden, ohne daß das vorhandene Gut Schädigungen ausgesetzt würde. Die Erfindung vermeidet durch die Eingriffsmöglichkeit unnötige Verweilzeiten, wodurch konstruktive Überdimensionierung vermieden und Energie eingespart wird. Es ist somit möglich, mehrere größere Verfahrensschritte in einem einzelnen Apparat nacheinander durchzuführen. Dadurch entfallen Übergänge zwischen einzelnen Apparaten und gegebenenfalls Zwischenlagerungen.

Nach einer Weiterbildung der Erfindung ist wenigstens ein Abschnitt mit einem weiteren Materialeinlaß und/oder Materialauslaß versehen. Dadurch wird die Möglichkeit eingeräumt, dem Behandlungsgut auf seinem Wege durch den Behandlungsstrang an bestimmten Stellen weiteres Gut, beispielsweise Flüssigkeiten oder Gase, aber auch feinteilige Feststoffe, zuzuführen oder ihm zu entziehen. Es versteht sich, daß auch mehrere Zusatzstoffe gleichzeitig in gleiche Abschnitte eingeführt werden können.

Vorzugsweise bildet jeweils ein Rohr einen Abschnitt. Diese Ausführungsform ist konstruktiv sehr günstig, weil man dann die Einlässe und Auslässe für die Zusatzstoffe stirnseitig an den Rohren anordnen kann. Dies schließt natürlich die Möglichkeit nicht aus, daß die Eintragstelle innerhalb eines Abschnitts noch besonders gewählt wird. Ein stirnseitiger Eintrag oder Austrag ist allerdings nur möglich, wenn sich der Abschnitt über mindestens eine ganze bzw. mehrfache Rohrlängen des Behandlungsstranges erstreckt. Besitzen die einzelnen Abschnitte keine volle Rohrlänge, so sind Abdichtungen innerhalb des Rohres vorzusehen, die ansonsten an den Verbindungsstellen zweier Rohre vorhanden sein können. Diese Abdichtung benachbarter Gasräume gegeneinander geschieht in einfachster Weise dadurch, daß das Behandlungsgut derart gestaut wird, daß sich ein Pfropfen bildet. Dazu benützt man vorzugsweise Förderelemente, wie beispielsweise an der Wandung der Rohre angebrachte kernlose Förderspiralen oder durch Querwände gebildete Engstellen. Dienen die Gutdurchlässe zwischen zwei Rohren gleichzeitig zur Begrenzung eines Abschnittes, so sind diese vorzugsweise ebenfalls so konstruiert, daß ein permanenter Gutstau vorhanden ist, der den Durchtritt der Gase verhindert. Hierzu lassen sich beispielsweise Querverbindungen mit Klappen verwenden, wobei sich diese Klappen infolge der Rotation des Reaktors selbsttätig öffnen und schließen. Durch entsprechende gewichtsmäßige Ausbildung bleiben diese Klappen auch bis zu einem gewünschten Druck geschlossen.

Auf Grund der Gasabfuhr zwischen den Abschnitten wird in vielen Fällen schon erreicht, daß auf eine spezielle Abdichtung zwischen den Abschnitten verzichtet werden kann. Auf Grund der Gasströmungswiderstände in den Rohren kann schon eine ausreichende Abgrenzung der Gasatmosphäre zwischen den einzelnen Abschnitten erreicht werden.

Vorzugsweise sind mehrere Behandlungsstränge vorgesehen.

Dies hat den Vorteil, daß das Behandlungsgut den einzelnen Behandlungssträngen in relativ geringer Menge aufgegeben werden kann, so daß eine große freie Oberfläche des Behandlungsgutes vorhanden ist, wodurch die Reaktionen und Wärmeübergänge gesteuert werden.

Nach einer Weiterbildung der Erfindung sind die Gutabführungen mehrerer paralleler Behandlungsstränge mit der Gutzuführung eines weiteren Behandlungsstranges verbunden.

Andererseits ist es auch möglich, die Gutabführung eines einzelnen Behandlungsstranges mit den Gutzuführungen mehrerer Behandlungsstränge zu verbinden.

Diese Zusammenführung oder Auseinanderführung von Behandlungssträngen ergibt neue Möglichkeiten bei der Durchführung von Reaktionen. So kann beispielsweise in parallel geschalteten Behandlungssträngen einem Behandlungsstrang ein Zusatzmittel aufgegeben werden, dem anderen jedoch nicht, wobei dann das Gut aus beiden Behandlungssträngen an der Eintrittstelle in den gemeinsamen dritten Behandlungsstrang miteinander vermischt wird. Weiterhin ist es möglich, einen Teil des Fertiggutes zurückzuführen und dem Aufgabegut, z.B. zu Magerungszwecken, an beliebiger Stelle wieder zuzuführen.

Vorzugsweise bestehen die Gutzuführungen der einzelnen Behandlungsstränge aus einem gemeinsamen ringartigen Trog, in den eine Aufgabevorrichtung mündet. Dieser Trog ist so angeordnet, daß er beispielsweise an der Stirnscheibe des Reaktors angeflanscht ist, so daß das aufgegebene Gut im bei der Rotation jeweils unten befindlichen Bereich ein gewisses Niveau aufrechterhält, wobei beim Durchlauf der Einlässe der Behandlungsstränge durch diese Gutanhäufung das Gut eingetragen wird. Gegenenfalls weist der Trog Schaufelelemente auf, die das Einbringen in die Behandlungsstränge begünstigen.

Vorzugsweise sind in den Abschnitten Förderelemente angeordnet. Mittels dieser Förderelemente ist die Transportgeschwindigkeit durch die Abschnitte steuerbar. Als Förderelemente eignen sich insbesondere Förderspiralen, die an der Wandung der Rohre angeordnet sind oder schaufelartige Einbauten. Außerdem können oberflächenvergrößernde und/oder oberflächenreinigende Zusatzeinbauten, wie Höcker, Schaufeln, Stifte, Leisten, Ketten, Halbrohre, vorgesehen sein.

Der erfindungsgemäße Drehrohrreaktor ist technisch sehr vielseitig einsetzbar. So kann er prinzipiell bei der thermischen Behandlung, d.h. beim Aufheizen, Abkühlen oder um Gut über eine längere Zeitspanne auf einer bestimmten Temperatur zu halten, eingesetzt werden. Es ist hierbei unerheblich, ob in dem zu behandelnden Gut eine chemische Reaktion oder nur eine physikalische Reaktion auftritt.

Gegenstand der vorliegenden Erfindung ist daher auch noch die Verwendung des Drehrohrreaktors für verschiedene Verfahren.

Zum Gegenstand der Erfindung gehört die Verwendung des Drehrohrreaktors zur Aktivierung von Zeolithgranalien, zur Herstellung feinteiliger Metalle durch Reduktion oxidischer Materialien mit reduzierenden Gasen und zur Wärmebehandlung eines Gemisches aus Flußspat und Schwefelsäure zur Herstellung von Flußsäure.

In dem vorstehend beschriebenen Drehrohrreaktor können des weiteren feinteilige Erze zur Vorbereitung der Aufbereitung reduziert bzw. oxidiert werden.

Da durch die Verteilung des oder der Reaktionsgase eine gute Wärmeabfuhr gleichmäßig über den Reaktionsraum erfolgt, können in dem Drehrohrreaktor auch stark exotherme Prozesse durchgeführt werden. Solche Prozesse sind z.B. die Kohlevergasung, die Chlorierung von Metallen bzw. Metalloxiden, die Herstellung von Aluminiumfluorid aus Aluminiumoxid mittels Flußsäure und auch Kontaktprozesse, wie die Oxidation von $SO_2$ zu $SO_3$.

Die Erfindung befaßt sich auch mit dem Verfahren zur Herstellung von Aktivkohle unter Verwendung des Drehrohrreaktors, welches dadurch gekennzeichnet ist, daß kohlenstoffhaltige Materialien in den vorstehend beschriebenen Drehrohrreaktor kontinuierlich eingebracht, auf Temperaturen zwischen 240 und 1 050 °C erhitzt und die entstehenden Gase und das behandelte Gut kontinuierlich abgezogen werden.

In der Zeichnung der erfindungsgemäße Drehrohrreaktor in mehreren Ausführungsbeispielen rein schematisch dargestellt und nachstehend näher erläutert. Es zeigen :

Figur 1 den Drehrohrreaktor nach einem ersten Ausführungsbeispiel im Schnitt gemäß Linie A-B in Fig. 2,

Figur 2 einen Schnitt durch den Reaktor gemäß Linie C-D in Fig. 1,

Figur 3 das Schema der Zusammenführung zweier Behandlungsstränge zu einem dritten und

Figur 4 das Schema der Aufteilung eines Behandlungsstranges in zwei weitere.

Figur 5 den Drehrohrreaktor nach einem zweiten Ausführungsbeispiel im Schnitt gemäß Linie E-F in Fig. 6,

Figur 6 einen Schnitt durch den Reaktor gemäß Linie G-H in Fig. 5,

Figur 7 den Drehrohrreaktor nach einem dritten Ausführungsbeispiel im Schnitt gemäß Linie I-K in Fig. 8,

Figur 8 einen Schnitt durch den Reaktor gemäß Linie L-M in Fig. 7,

Figur 9 eine Variante des Drehrohrreaktors nach Fig. 7, 8 im Längsschnitt,

Figur 10 die Einzelheit Y aus Fig. 9 in vergrößerter Darstellung im Längsschnitt,

Figur 11 einen Schnitt gemäß Linie N-O in Fig. 10,

Figur 12 eine weitere Variante des Drehrohrreaktors nach Fig. 7, 8 im Längsschnitt und

Figur 13 die Einzelheit X aus Fig. 12 in vergrößerter Darstellung.

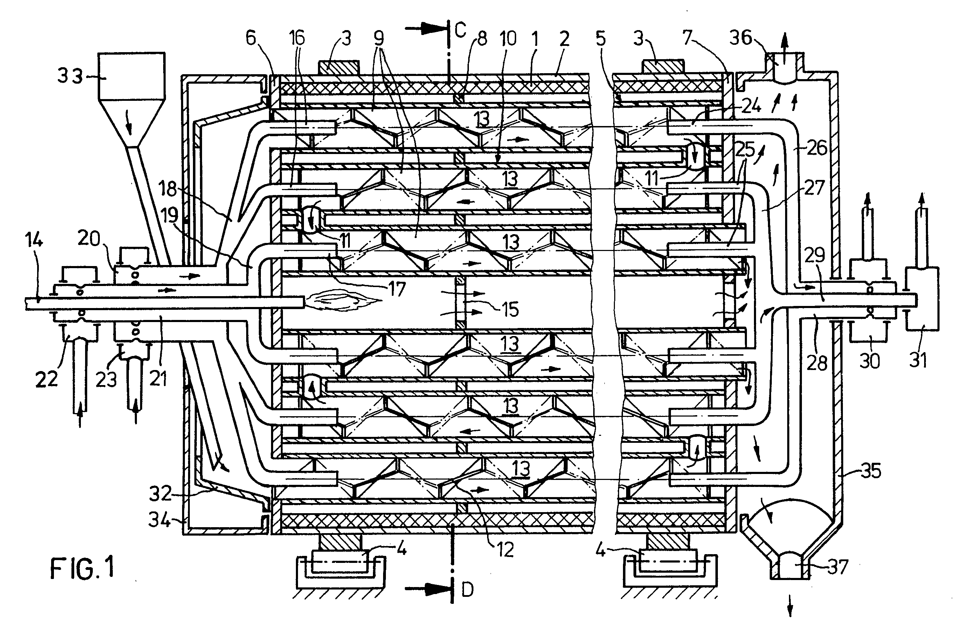

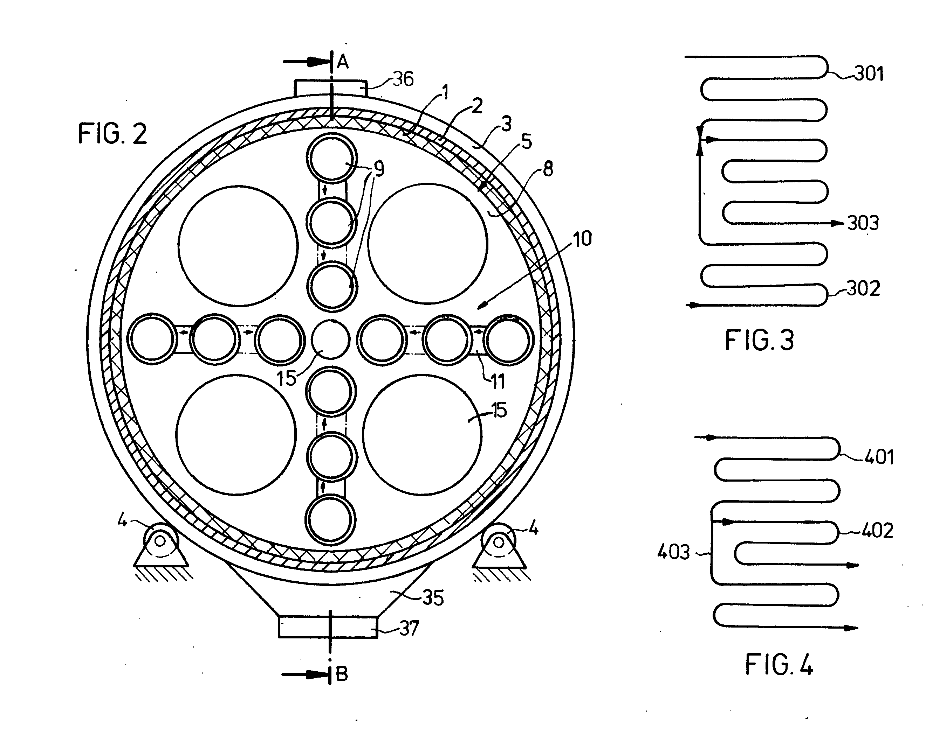

In Fig. 1, 2 besteht der Drehrohrreaktor aus einem mit feuerfestem Material 1 ausgemauerten Außenmantel 2, der von zwei Laufringen 3 umgeben ist. Sie sind auf Tragrollen 4 gelagert. Der Antrieb, der über Ritzel und Zahnkranz erfolgt, ist nicht dargestellt.

Der Außenmantel 2 umgibt einen Einsatz 5.

Dieser besteht im einzelnen aus Stirnscheiben 6, 7 und Zwischenscheiben 8, in denen Behandlungsrohre 9 gelagert sind. Jedes der Behandlungsrohre 9 bildet eine Kammer, d.h. einen Abschnitt, und mehrere solcher Abschnitte sind zu einem Behandlungsstrang 10 hintereinandergeschaltet, von denen (Fig. 2) vier dargestellt sind. Die einzelnen Abschnitte 9 sind durch Gutdurchlässe 11 miteinander verbunden. Als Förderelemente 12 in den Abschnitten 9 dienen kernlose, an den Rohrinnenwandungen befindliche Spiralen. Die Gutdurchlässe 11 sind so konstruiert, daß die Gasräume 13 der einzelnen Abschnitte 9 durch Stauung des Gutes gegeneinander abgedichtet sind. In den Einsatz 5 ragt eine Brennerlanze 14 hinein, mittels der die Abschnitte 9 indirekt beheizt werden. Die Zwischenscheiben 8 weisen Durchtritte 15 für die Abgase auf. Durch die Stirnscheibe 6 sind Materialzufuhrstutzen 16, 17 geführt, die über Verbindungsrohre 18, 19 an in der Rotationsachse liegende, konzentrische Kammern 20, 21 angeschlossen sind. Jenen werden weitere Behandlungsmaterialien, bei dieser Ausführungsform insbesondere Gas oder Flüssigkeit, über Gleitringkammern 22, 23 zugeführt. Durch die Stirnscheibe 7 führen aus den Abschnitten 9 Auslaßstutzen 24, 25 heraus und münden über Verbindungensrohre 26, 27 in zur Rotationsachse konzentrische Kammern 28, 29, aus denen die Materialien über Gleitringkammern 30, 31 abgeführt werden. Es versteht sich, daß die Materialien sich auch in Gegenrichtung durch die Abschnitte 9 führen lassen, was bei bestimmten Reaktionen vorteilhaft sein kann. Die Stirnscheibe 6 trägt außenseitig einen ringartigen Trog 32, in den das zu behandelnde Gut über eine Aufgabevorrichtung 33 eingegeben wird, von wo aus es in die offenen Abschnitte 9, die jeweils den Anfang eines Behandlungsstranges 10 bilden, eingetragen wird. Aus Gründen der Sicherheit und der besseren Abdichtung ist der Stirnscheibe 6 ein feststehendes Kopfteil 34 zugeordnet. Auch der Stirnscheibe 7 ist ein Kopfteil 35 zugeordnet, das mit einem Gasabzugsstutzen 36 und einem Gutauslaß 37 versehen ist.

In Fig. 3 vereinigen sich zwei Behandlungsstränge 301, 302 zu einem weiteren Behandlungsstrang 303.

In Fig. 4 teilt sich ein Behandlungsstrang 401 in zwei weitere Behandlungsstränge 402, 403 auf.

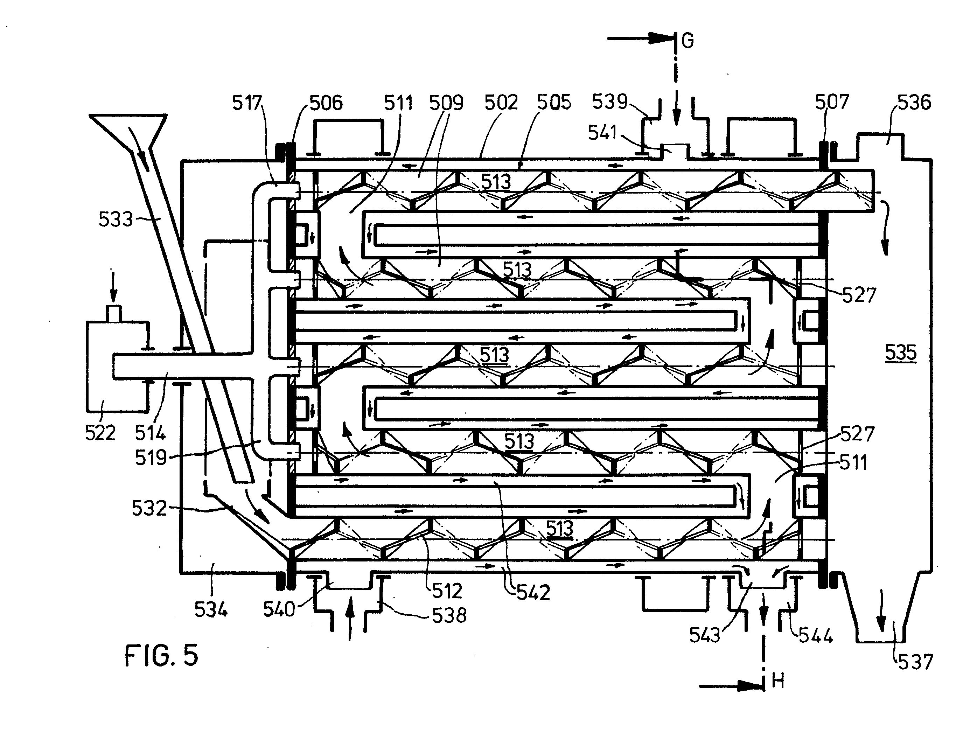

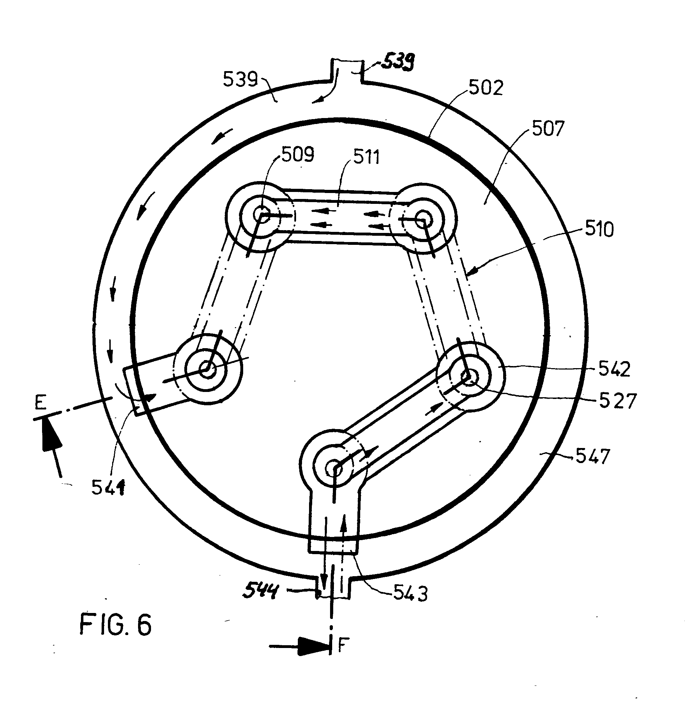

In Fig. 5, 6 besteht der Drehrohrreaktor aus einem Außenmantel 502. Die nicht dargestellte Lagerung erfolgt über Laufringe und Tragrollen. Der über Zahnkranz und Ritzel stattfindende Antrieb ist ebenfalls nicht dargestellt. Der Außenmantel 502 umgibt einen Einsatz 505. Dieser besteht im einzelnen aus Stirnscheiben 506, 507, in denen Behandlungsrohre 509 gelagert sind. Jedes der Behandlungsrohre 509 bildet eine Kammer, d.h. einen Abschnitt. Fünf solcher Abschnitte 509 sind zu einem Behandlungsstrang 510 (Fig. 6) hintereinander geschaltet. Die einzelnen Abschnitte 509 sind durch Gutdurchlässe 511 miteinander verbunden. Als Förderelemente 512 dienen kernlose, durch die Stirnscheiben 506 bzw. 507 einschiebbare und an ihnen befestigte Spiralen.

Die Beheizung erfolgt durch Flammgase, die über Gleitringhauben 538, 539 durch im Außenmantel 502 vorgesehene Öffnungen 540, 541 einführbar sind und durch, die Rohre 509 und die Gutdurchlässe 511 umgebende, Heizmäntel 542 zur gemeinsamen Auläßöffnung 543 gelangen, von wo sie über eine Gleitringhaube 522 einer axialen Kammer 514 zuführbar, von wo aus sie über Verbindungsrohre 519, deren Stutzen 517 durch die Stirnscheibe 506 in die Abschnitte 509 weisen, in diese Abschnitte 509 gelangen. Zur Stirnseite 507 hin sind die Abschnitte 509 mit Gasdurchlässen 527 versehen. Die Stirnscheibe 506 trägt außenseitig einen Trog 532, in dem das zu behandelnde Gut über eine Aufgabevorrichtung 533 eingegeben wird, von wo aus es in den ersten Abschnitt 509 des Behandlungsstranges 510 eingetragen wird. Der Stirnscheibe 506 ist ein feststehendes Kopfteil 534 zugeordnet ; der Stirnscheibe 507 das feststehende Kopfteil 535, das mit einem Gasabzugsstutzen 536 und einem Gutauslaß 537 versehen ist.

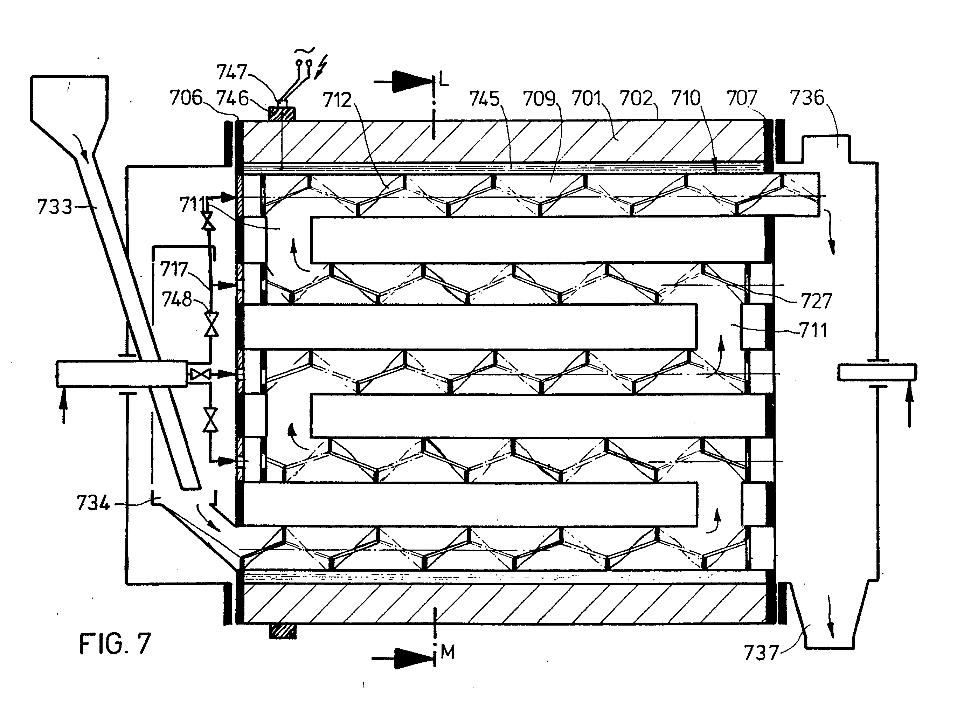

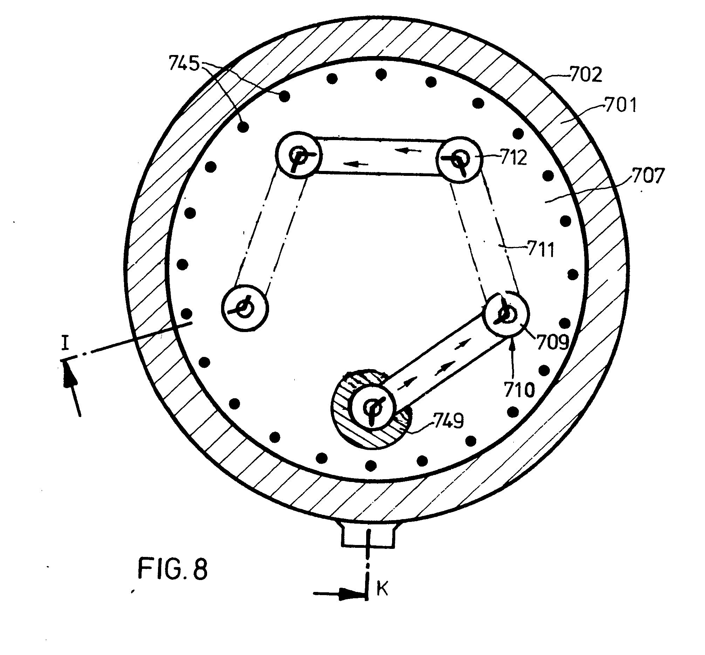

In Fig. 7, 8 besteht der Drehrohrreaktor aus einem mit feuerfestem Material 701 ausgemauerten Außenmantel 702. Lagerung und Antrieb sind nicht dargestellt. In Stirnscheiben 706, 707 sind Behandlungsrohre 709 gelagert. Jedes dieser Behandlungsrohre 709 bildet eine Kammer, d.h. einen Abschnitt. Fünf solcher Abschnitte 709 sind zu einem Behandlungsstrang 710 (Fig. 8) hintereinandergeschaltet. Die einzelnen Abschnitte 709 sind durch Gutdurchlässe 711 miteinander verbunden. In den Abschnitten 709 sind kernlose Wendeln 712 angeordnet. Die Beheizung erfolgt über elektrische Widerstandsheizstäbe 745, denen über Schleifring 746 und Schleifkontakt 747 Strom zugeführt wird. Die Aufgabe des Gutes erfolgt über die Schurre 733 und den Trog 734. Die Verbindungsrohre 717 sind durch einzelne, mittels Schieber 748 absperrbare Verbindungsrohre 717 mit Fluiden beschickbar. Die Fluide können durch die Gasauslässe 727 entweichen. Der erste Abschnitt 709 ist mit Wärmedämm-Material 749 (Fig. 8) umgeben.

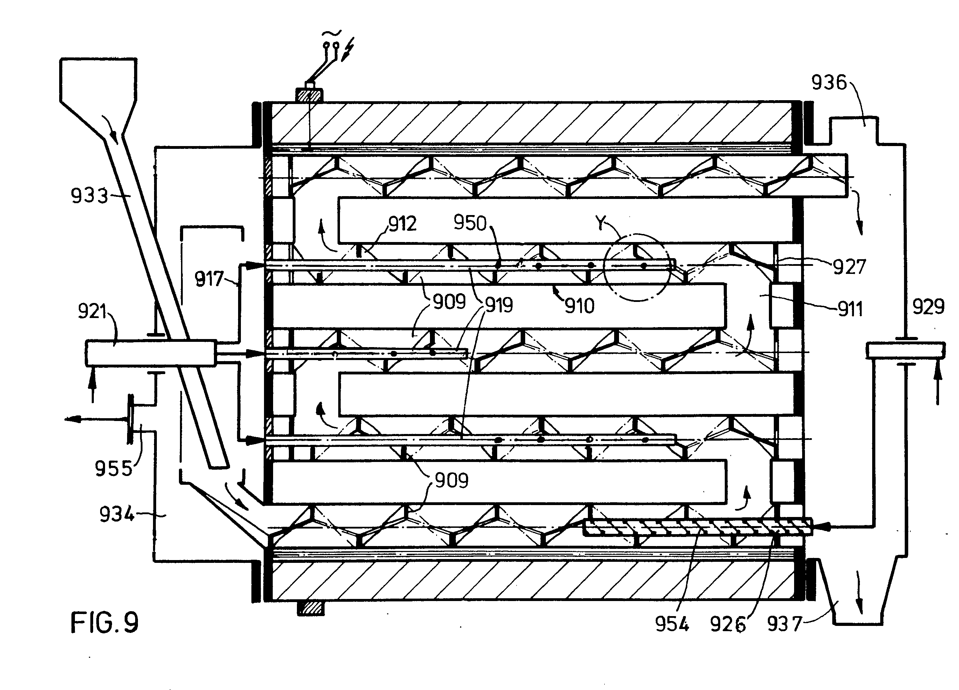

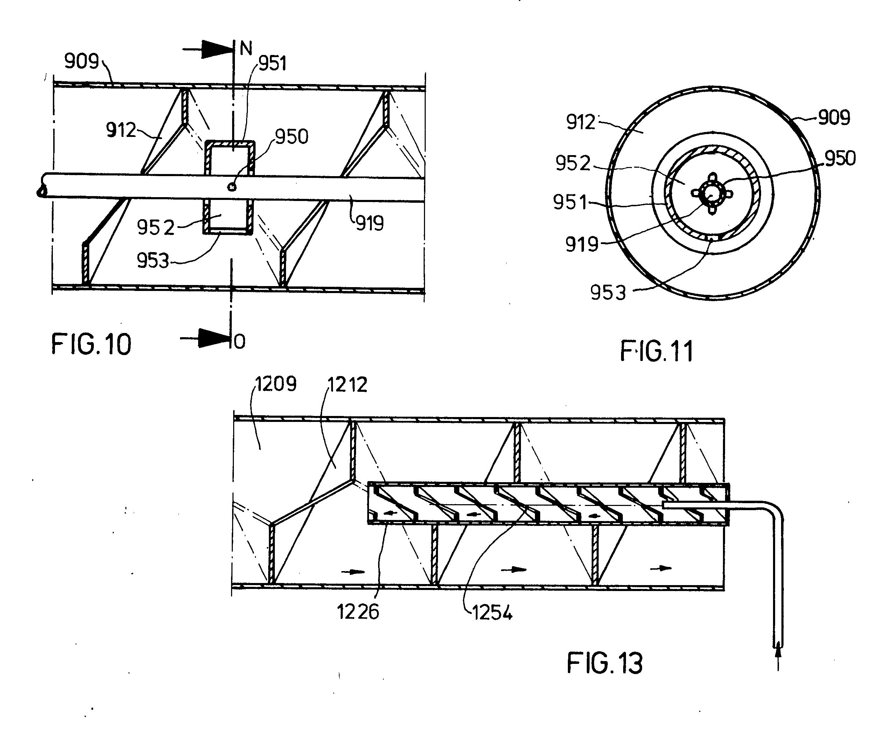

In Fig. 9, 10, 11 entspricht der Aufbau des Reaktors im wesentlichen denjenigen gemäß Fig. 7, 8. Jedoch sind Beschickungsrohre 919 vorgesehen, die jeweils in den zweiten bis vierten Abschnitt 909 des Behandlungsstranges 910 axial und weit hineinragen. Sie stehen mit einer axialen Zuführung 921 in Verbindung und weisen Öffnungen 950 auf. Diese sind jeweils durch eine Haube 951 (Fig. 10) abgedeckt, die einen Ringraum 952 einschließt und einen Spalt 953 aufweist. Weiterhin ist in das hintere Ende des ersten Abschnittes 909 ein weiteres Beschickungsrohr 926 eingeschoben, das eine Rückförderspirale 954 aufweist und mit der Zuführung 929 in Verbindung steht. An dem abgedichteten kopfteil 934 ist ein Absaugstutzen 955 vorgesehen.

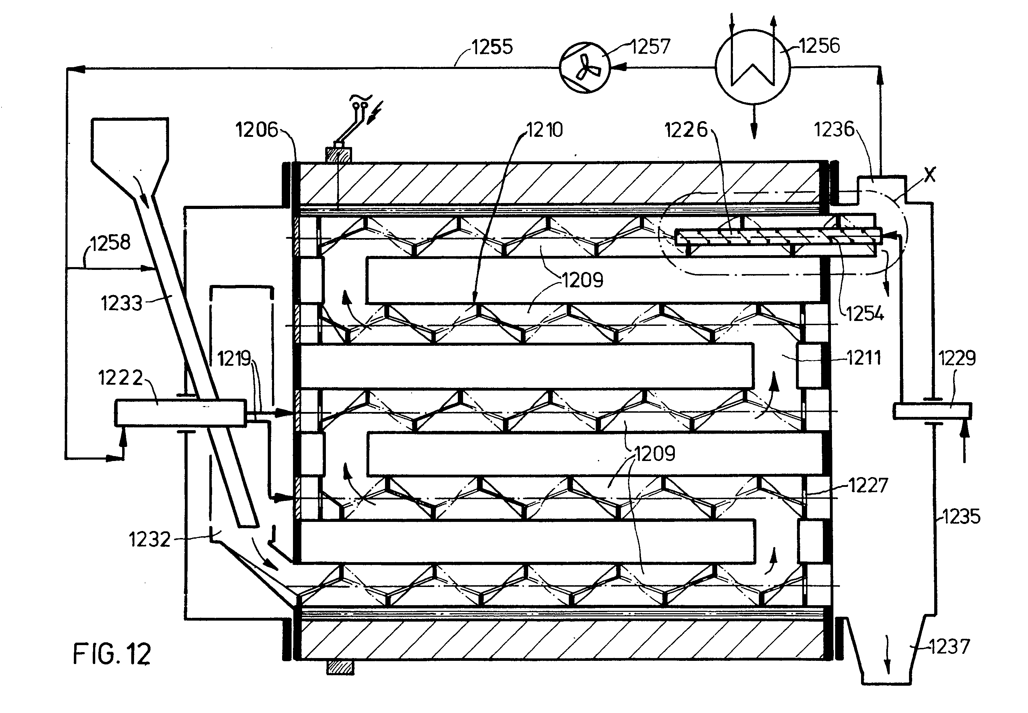

Auch der Reaktor gemäß Fig. 12, 13 entspricht im wesentlichen demjenigen gemäß Fig. 7, 8. Im letzten Abschnitt 1 209 des Behandlungsstranges 1 210 ist austragsseitig ein Beschickungsrohr 1 226 eingeschoben, das mit einer Zuführung 1 229 in Verbindung steht. Das Beschickungsrohr 1 226 weist eine kernlose Rückförderwendel 1 254 auf. Die Beschickungsvorrichtung ist mit 1 233 bezeichnet und öffnet in einen Trog 1 232, der an der Stirnscheibe 1 206 befestigt ist. Das hintere Kopfteil 1 235 ist mit einem Gutaustrag 1 237 versehen. Der Gasauslaß 1 236 ist mit einer Rückführleitung 1 255 verbunden, die in eine Zuführung 1 222 mündet. Von jener zweigen Verbindungsrohre 1 219 ab und führen in den zweiten und dritten Abschnitt 1 209 des Behandlungsstranges 1 210 hinein. In der Rückführungsleitung 1 255 ist ein Kühler 1 256 und ein Gebläse 1 257 zwischengeschaltet. Außerdem zweigt von der Rückführungsleitung 1 255 eine Stichleitung 1 258 ab und mündet in die Aufgabevorrichtung 1 233.

Im Zusammenhang mit der erfindungsgemäßen Verwendung des Drehrohrreaktors für verschiedene Verfahren folgen einige Beispiele :

Beispiel 1

Thermische Vorbehandlung von Aktivkohle

Es wurde ein Drehrohrreaktor der Ausführungsart nach Fig. 5, 6 verwendet. Er bestand aus dem sich drehenden Mantel 502 mit den Stirnflächen 506, 507. In ihm waren die Rohre 509 konzentrisch zur Drehachse des Reaktors eingesetzt. Eintragsseitig waren sie geschlossen und mit den Gaseinlässen 517 versehen. Am anderen Ende waren sie offen, die Gase konnten in den Kopfteil 535 entweichen.

In den Rohren 509 waren kernlose Wendeln 512 angeordnet. Eine Windung besaß ein Nutzvolumen von 1,5 l. Der gesamte Reaktor wies 100 Windungen auf. Die Beheizung erfolgte durch Flammengase, die durch die Öffnungen 540, 541 eintraten und durch die Mantelrohre 542, welche die Abschnitte 509 umgeben, hindurchgeführt wurden. Die zwei getrennten Heizstränge wurden auf 240 °C (erster Abschnitt 509) und 300 °C (übrige Abschnitte 509) eingestellt. Der Abzug der Heizgase erfolgte gemeinsam durch die Öffnung 543. Der Reaktor wurde über die Schurre 533 mit 40 kg pro Stunde Formlingen, die aus fein gemahlener Steinkohle und einem wäßrigen Phenolbinder bestanden und nach einem Strangpreßverfahren hergestellt worden waren, beschickt. Der zweite bis vierte Abschnitt 509 wurde mit je 0,5 $m^3_N$/h Inertgas überlagert und der letzte Abschnitt 509 mit 10 $m^3_N$/h Inertgas beaufschlagt. Nach einer Verweilzeit von ca. 2,5 Stunden (entsprechend 0,67 Umdrehungen pro Minute) wurden 32 kg pro Stunde harte Formlinge, die für die weitere Verarbeitung gut geeignet sind, erhalten. Die ausgetriebene Feuchtigkeit und andere ausgetriebene Stoffe verließen den Reaktor durch den Gasabzug 536, die Formlinge durch den Gutaustrag 537.

Beispiel 2

Schwelung von Aktivkohle

Es wurde ein Reaktor gemäß Fig. 7, 8 mit elektrischer Strahlungsheizung verwendet ; jedoch ohne die Isolation 749 des ersten Abschnitts 709. Die starke äußere Isolation 701 sorgte für eine Verringerung der Wärmeverluste. Windungsvolumen und Anzahl der Windungen entsprechen der Ausführungsform gemäß Fig. 5, 6.

Mittels Strahlungsheizung wurde eine Temperatur von 780 °C im Reaktor gehalten und 67 kg pro Stunde der nach Beispiel 1 erhaltenen Formlinge über die Aufgabevorrichtung 733 eindosiert. Der zweite bis vierte sowie der fünfte Rohrabschnitt 709 wurden mit je 1 $m^3_N$/h Stickstoff überlagert. Nach einer Verweilzeit von 1,5 Stunden (entsprechend 1,1 U/min) des Reaktors wurden am Austrag 737 47 kg pro Stunde harte Formlinge erhalten. Die Schwelgase wurden durch den Gasabzug 736 abgezogen.

Beispiel 3

Aktivierung von Aktivkohle

Der für die Aktivierung eingesetzte Drehrohrreaktor entspricht demjenigen gemäß Fig. 7, 8, jedoch ist der erste Abschnitt 509 nicht isoliert. Die Heizung wurde auf 980 °C und bei 40 kg pro Stunde Formkoks eindosiert, der gemäß Beispiel 2 gewonnen wurde. In den zweiten bis fünften Abschnitt 709 wurden je 14,4 kg pro Stunde Dampf eingeblasen. Bei einer Umdrehungszahl von 0,83 U/min wurde nach einer Verweilzeit von ca. 2 Stunden 13,6 kg/h Aktivat am Austrag 737 erhalten. Das Aktivat wies sehr gute Eigenschaften auf.

Beispiel 4

Aktivierung von Zeolith-Granalien

Der verwendete Reaktor entspricht Fig. 7, 8, wobei der erste Abschnitt 709 mit einer wärmedämmenden Schicht 749 (Fig. 8) umgeben war, so daß trotz der einheitlichen Temperatur von 400 °C im Inneren des Reaktors die Aufheizung und Entwässerung im ersten Abschnitt 709 schonend erfolgte. Der Reaktor wurde mit 50 kg pro Stunde bei 110 °C getrocknetem Zeolith-Granulat beschickt. Über die Gaseinlässe 717 wurden je 5 $m^3_N$/h trockene Luft zugeführt und über eine Umdrehungszahl von 1,67 U/min für den Reaktor eine Verweilzeit von ca. 1 Stunde eingestellt. Am Austrag 737 wurden 38,4 kg pro Stunde aktives Granulat mit einem Restwassergehalt von unter 1 % erhalten.

Beispiel 5

Herstellung von Flußsäure aus vorerhitztem Flußspat

Die Umsetzung zwischen Flußspat und konzentrierter Schwefelsäure wurde in einem Reaktor nach Fig. 9, 10, 11 ausgeführt. Der erste Abschnitt 909 war an seinem hinteren Ende mit einem Beschickungsrohr 926 versehen, das in seinem Inneren eine Rückförderspirale 954 aufwies, durch das 15 $m^3_N$/h auf 400 °C vorgewärmte Luft zugeführt wurde. Da das Beschickungsrohr 926 genau in die Förderwendel 912 paßte und deren Gänge laufend mit Gut gefüllt waren, mußte die Luft den ersten Abschnitt 909 im Gegenstrom passieren, verließ ihn durch die Guteintragsöffnung und wurde am Kopfteil 934 durch den Stutzen 955 abgeführt. Auf diese Weise wurden Verunreinigungen entfernt.

In den zweiten bis vierten Abschnitt 909 wurde je ein Rohr 919 weit hineingeführt. Je Windung der Förderwendel 912 war eine Öffnung 950 vorgesehen (Fig. 10, 11). Dadurch erfolgte die Zugabe der zur Reaktion benötigten Schwefelsäure, die gleichmäßig verteilt aus allen Öffnungen 950 floß. Die Öffnungen 950 waren jede von einem Ringraum 952 umgeben, der die Schwefelsäure während der Umdrehung sammelte und sie durch die Öffnungen 953 nach unten ausfließen ließ. Über die Aufgabevorrichtung 933 wurden 39 kg pro Stunde fein gemahlener Flußspat eindosiert. Es wurden 51 kg pro Stunde konzentrierte Schwefelsäure in dem zweiten bis vierten Abschnitt 909 verteilt. Das Innere des Reaktors wurde auf 350-400 °C aufgeheizt. Durch den als Schleuse ausgebildeten Gutaustrag 937 wurden 68,4 kg pro Stunde feinkörniger Anhydrit entnommen, während die gebildete Flußsäure am Gasabzug 936 abgenommen wurde.

Beispiel 6

Herstellung von feinteiligem Eisenpulver

Bei der Verwendung des einzusetzenden Reaktors war zu beachten, die Reaktion $Fe_2O_3 + 3H_2 \longrightarrow 2Fe + 3H_2O$ bei einem möglichst geringen Partialdruck an Wasserdampf auszuführen. Es wurde der Reaktor gemäß Fig. 12 verwendet, da bei ihm in den letzten Abschnitt 1 209 im Gegenstrom reiner Wasserstoff eingeführt werden konnte. Die Zufuhr erfolgte durch das Beschickungsrohr 1 226, das durch eine Rückförderspirale 1 254 gegen Gutaustritt gesichert war. Das Innere des Reaktors wurde auf 450 °C aufgeheizt und über gasdichte, wasserstoffgespülte Bunker mittels der Aufgabevorrichtung 1 233 40 kg pro Stunde Eisenoxid eingetragen. Über das Beschickungsrohr 1 226 wurden 16,8 $m^3_N$/h reiner trockener Wasserstoff dem Reaktor zugeführt, welcher die beiden letzten Abschnitte 1 209 im Gegenstrom durchströmte. Durch die Verbindungsrohre 1 219 wurden in den ersten Abschnitt über die Stichleitung 1 258 und die Aufgabevorrichtung 1 233 und in den zweiten bis dritten Abschnitt weitere 10 $m^3_N$/h Wasserstoff eingeführt, der aus dem Gasabzug 1 236 über die Rücklaufleitung 1 255 rezirkuliert wurde. Im Kühler 1 256 wurde dabei der Wasserstoff vom Reaktionswasser befreit. Das Wasserstoffgas wurde durch das Gebläse 1 257 komprimiert. Am Gutaustrag 1 237 wurden 27,9 kg feinteiliges Eisenpulver pro Stunde ausgeschleust.

**Ansprüche**

1. Drehrohrreaktor zum Wärmebehandeln von Gut in Form von pulvrigem bis stückigem Feststoff und/oder Stoffen in Form von Flüssigkeit unter Entwicklung von Gasen und gegebenenfalls Zuführung weiterer Stoffe, bestehend aus einem Bündel achsparalleler Rohre, die in dazu senkrecht angeordneten Scheiben gelagert sind, indem die einzelnen Rohre zu mindestens einem Behandlungsstrang miteinander verbunden sind, dessen Beginn einer Gutzuführung und dessen Ende einer Gutabführung zugeordnet sind, dadurch gekennzeichnet, daß der Behandlungsstrang (10, 510, 710, 910, 1210) in einzelne Abschnitte (9, 509, 709, 909, 1 209) unterteilt ist, wobei jeder Abschnitt (9, 509, 709, 909, 1 209) mit einer Gasabführung (24, 25, 527, 727, 927, 1 227) versehen ist und wobei die benachbarten Abschnitte (9, 509, 709, 909, 1 209) durch Gutdurchlässe (11, 511, 711, 911, 1 211) miteinander verbunden sind.

2. Drehrohrreaktor nach Anspruch 1, dadurch gekennzeichnet, daß wenigstens ein Abschnitt (9) mit einem weiteren Materialeinlaß (16, 17, 517, 717, 917, 926, 1 219, 1 226) versehen ist.

3. Drehrohrreaktor nach den Ansprüchen 1 oder 2, dadurch gekennzeichnet, daß mehrere parallele Behandlungsstränge (10, 510, 710, 910, 1 210) vorgesehen sind.

4. Drehrohrreaktor nach Anspruch 3, dadurch gekennzeichnet, daß die Gutabführungen mehrerer paralleler Behandlungsstränge (301, 302) mit der Gutzuführung eines weiteren Behandlungsstranges (303) verbunden sind.

5. Drehrohrreaktor nach Anspruch 3 oder 4, dadurch gekennzeichnet, daß die Gutabführung eines einzelnen Behandlungsstranges (401) mit den Gutzuführungen mehrerer Behandlungsstränge (402, 403) verbunden ist.

6. Verwendung des Drehrohrreaktors nach einem oder mehreren der Ansprüche 1 bis 5 zur Wärmebehandlung von kohlenstoffhaltigen Materialien.

7. Verwendung des Drehrohrreaktors nach einem oder mehreren der Ansprüche 1 bis 5 zur Herstellung von Aktivkohle.

8. Verwendung des Drehrohrreaktors nach einem oder mehreren der Ansprüche 1 bis 5 zur Aktivierung von Zeolith-Granalien.

9. Verwendung des Drehrohrreaktors nach einem oder mehreren der Ansprüche 1 bis 5 zur Wärmebehandlung eines Gemisches aus Flußspat und Schwefelsäure.

10. Verwendung des Drehrohrreaktors nach einem oder mehreren der Ansprüche 1 bis 5 zur Herstellung pyrophorer Metalle.

**Claims**

1. A rotary tube reactor for the thermal treatment of material in the form of powdered to lumpy solid material and/or substances in the form of liquid, with evolution of gases and optionally the supply of other substances, consisting of a bundle of axially parallel tubes which are mounted in plates arranged perpendicularly thereto, in that the individual tubes are joined together to form at least one treatment line whose beginning is provided with a material supply means and whose end is supplied with a material outlet, characterised in that the treatment line (10, 510, 710, 910, 1 210) is divided into individual sections (9, 509, 709, 909, 1 209), each section (9, 509, 709, 909, 1 209) being provided with a gas · outlet (24, 25, 527, 727, 927, 1 227) and the adjacent sections (9, 509, 709, 909, 1 209) being joined together by material passages (11, 511, 711, 911, 1 211).

2. A rotary tube reactor according to Claim 1, characterised in that at least one section (9) is provided with an additional material inlet (16, 17, 517, 717, 917, 926, 1 219, 1 226).

3. A rotary tube reactor according to Claims 1 or 2, characterised in that several parallel treatment lines (10, 510, 710, 910, 1 210) are provided.

4. A rotary tube reactor according to Claim 3, characterised in that the material outlets of several parallel treatment lines (301, 302) are joined to the material inlet of another treatment path (303).

5. A rotary tube reactor according to Claim 3 or 4, characterised in that the material outlet of an individual treatment strand (401) is joined to the material inlets of several treatments lines (402, 403).

6. Use of the rotary tube reactor according to one or more of Claims 1 to 5 for the thermal treatment of carbon-containing materials.

7. Use of the rotary tube reactor according to one or more of Claims 1 to 5 for the production of activated carbon.

8. Use of the rotary tube reactor according to one or more of Claims 1 to 5 for the activation of zeolite granules.

9. Use of the rotary tube reactor according to one or more of Claims 1 to 5 for the thermal treatment of a mixture of fluor spar and sulphuric acid.

10. Use of the rotary tube reactor according to one or more of Claims 1 to 5 for the production of pyrophorous metals.

**Revendications**

1. Réacteur tubulaire rotatif pour le traitement thermique de matière solide, de l'état pulvérulent à l'état en morceaux, et/ou de matières sous forme liquide avec dégagement de gaz et éventuellement addition d'autres matières, consistant en un faisceau de tubes à axes parallèles, qui sont montés dans des disques qui leur sont perpendiculaires, les tubes individuels étant reliés les uns aux autres en au moins un réseau de traitement au début duquel se trouve un raccord d'admission de la matière et à la fin duquel se trouve un raccord d'évacuation de la matière, caractérisé par le fait que le réseau de traitement (10, 510, 710, 910, 1 210) est subdivisé en tronçons individuels (9, 509, 709, 909, 1 209), chaque tronçon (9, 509, 709, 909, 1 209) étant doté d'un raccord d'échappement des gaz (24, 25, 527, 727, 927, 1 227) et les tronçons voisins (9, 509, 709, 909, 1 209) étant reliés les uns aux autres par des passages (11, 511, 711, 911, 1 211) de la matière.

2. Réacteur tubulaire rotatif selon la revendication 1, caractérisé par· le fait qu'au moins un tronçon (9) est doté d'un autre raccord (16, 17, 517, 717, 917, 926, 1 219, 1 226) d'admission de la matière.

3. Réacteur tubulaire rotatif selon la revendication 1 ou 2, caractérisé par le fait que plusieurs réseaux parallèles de traitement (10, 510, 710, 910, 1 210) sont prévus.

4. Réacteur tubulaire rotatif selon la revendication 3, caractérisé par le fait que les raccords d'évacuation de matière de plusieurs réseaux parallèles de traitement (301, 302) sont reliés au raccord d'admission de matière d'un autre réseau de traitement (303).

5. Réacteur tubulaire rotatif selon la revendication 3 ou 4, caractérisé par le fait que le raccord d'évacuation de matière d'un réseau isolé de traitement (401) est relié aux raccords d'admission de matière de plusieurs réseaux de traitement (402, 403).

8. Utilisation du réacteur tubulaire rotatif selon l'une ou plusieurs des revendications 1 à 5, pour le traitement thermique de matières carbonées.

7. Utilisation du réacteur tubulaire rotatif selon l'une ou plusieurs des revendications 1 à 5, pour la fabrication de charbon actif.

8. Utilisation du réacteur tubulaire rotatif selon l'une ou plusieurs des revendications 1 à 5, pour l'activation de granules de zéolithe.

9. Utilisation du réacteur tubulaire rotatif selon l'une ou plusieurs des revendications 1 à 5, pour le traitement thermique d'un mélange de spath fluor et d'acide sulfurique.

10. Utilisation du réacteur tubulaire rotatif selon l'une ou plusieurs des revendications 1 à 5, pour la fabrication de métaux pyrophoriques.

FIG.1

0 017 797

FIG. 2

FIG. 3

FIG. 4

0 017 797

FIG. 5

0 017 797

FIG. 6

FIG. 7

FIG. 8

FIG.9

FIG.10

FIG.11

FIG.13

FIG. 12

0 017 797